# EUROPEAN PATENT APPLICATION

(11) **EP 0 939 534 A1**
(43) Date of publication of application: **01.09.1999**
(21) Application number: 99103550.2
(22) Date of filing: 24.02.1999
(51) Int. Cl.: H04M 1/27

(54) **Method for recognizing speech on a mobile terminal**

(30) Priority: 27.02.1998 JP 4805598
(71) Applicant: NEC CORPORATION, Tokyo (JP)
(72) Inventor: Nakano, Fumio, c/o NEC Saitama, Ltd., Kodama-gun, Saitama (JP)
(74) Representative: Glawe, Delfs, Moll & Partner

(57) **Abstract**

When a cellular phone user presses a key and a controller 23 detects that the key has been pressed, the controller 23 outputs a speech-recognition-start sound. At the same time, the controller 23 causes a timer circuit 23A to start measuring a predetermined time of t1. When the predetermined time of t1 elapses after the speech-recognition-start sound is generated, the controller 23 starts a speech recognition operation and detects a user's speech. At this time, the controller 23 causes the timer circuit 23A to start measuring a predetermined time of t2. When the predetermined time of t2 elapses, the controller 23 stops the sound. After that, when a speech recognizing unit 25 detects the speech, the controller 23 controls the speech recognizing unit 25 to perform speech recognition processing and determines what is the detected speech.

## Description

### BACKGROUND OF THE INVENTION

### Field of the Invention

The present invention relates to a mobile terminal and more particularly to a mobile terminal having the speech recognition function.

### Description of the Related Art

Conventionally, a mobile terminal having the speech recognition function such as a cellular phone performs various control functions and operations: for example, it recognizes spoken sounds, translates them from one language to another, or outputs dial signals.

In this type of cellular phone, it is possible to recognize speech for a predetermined period only when the user presses a key on the phone. In this case, before starting recognizing speech, it is necessary to inform the user of the start of recognizing speech. More specifically, this process is done as follows. When the user presses the speech recognition start key, the phone emits a start sound for a predetermined period to inform the user that the phone will start speech recognition. After the predetermined time elapses, the phone stops the start sound and starts the speech recognition operation. Then, upon detection of user's speech, the phone recognizes it according to the predetermined method.

However, as the user becomes familiar with this speech recognition start operation, he or she sometimes starts speaking before the speech-recognition-start sound stops. This prevents the start of a speech, the most important part of speech recognition, from being recognized correctly, sometimes resulting in the whole speech being recognized incorrectly.

On the other hand, on a non-mobile unit, an approach sensor provided near the microphone senses the distance between the speaker's face and the microphone. Such a sensor is disclosed in Japanese laid-open patent application heisei 2-131300. Upon sensing that the speaker's face comes sufficiently close to the microphone, the unit starts speech recognition, thereafter it displays a message indicating that it is ready to receive speech.

### SUMMARY OF THE INVENTION

It is an object of this invention to provide a mobile terminal which has been improved on the conventional mobile terminal.

It is another object of this invention to provide a mobile terminal which performs correct speech detection, the important part of speech recognition, to prevent speech from being recognized incorrectly.

To achieve the above objects, the mobile terminal according to this invention includes a notification unit notifying a user of a start of speech recognition for a predetermined time, a speech recognizing unit recognizing speech and a start control unit starting speech recognition according to the speech recognizing unit before notification stops. The mobile terminal according to this invention further includes a storage unit storing a correspondence between partner's names and telephone numbers, an extraction unit extracting, when the speech recognizing unit recognizes the partner's name, the telephone number corresponding to the partner's name stored in the storage unit and an automatic calling unit making an automatic call to the telephone number extracted by the extraction unit. Preferably, the start control unit starts speech recognition according to the speech recognizing unit during a start of the notification and an end of it. Preferably, the mobile terminal according to this invention further includes a first measuring unit for measuring a first predetermined time after the start of the notification and the start control unit starts speech recognition according to the speech recognizing unit after the first predetermined time elapses. Preferably, the mobile terminal according to this invention further includes a second measuring unit measuring a second predetermined time after the start of the speech recognition; and a stop control unit stopping the notification after the second predetermined time elapses. It is preferable that the notification is started by a user's operation, that the operation is a key operation, and that the notifying unit notifies the start of speech recognition through a sound. The notifying unit may notify the start of speech recognition through at least one of a sound, a vibrator, and a LED.

The speech recognition method for use on the mobile terminal according to this invention includes the steps of notifying for a predetermined time that the terminal will start speech recognition; and starting the speech recognition before the notification stops. The speech recognition method for use on the mobile terminal according to this invention further includes the steps of storing a correspondence between partner's names and telephone numbers; recognizing the partner's name through the speech recognition; extracting the telephone number corresponding to the partner's name, the partner's name and the telephone number being stored in the storing step; and making an automatic call to the telephone number extracted by the extraction step. Preferably, the speech recognition start step starts said speech recognition at a point in time during a start of the notification and an end of it. Preferably, the speech recognition method for use on the mobile terminal further includes the step of measuring a first predetermined time after the start of the notification and the speech recognition start step starts recognizing speech after the first predetermined time elapses. The speech recognition method for use on the mobile terminal according to this invention further includes the steps of measuring a second predetermined time after the start of the speech recognition; and stopping the notification after the second predetermined time elapses. It is preferable that the notification is started by a user's operation, that the operation is a key operation, and that the notifying step notifies the start of speech recognition through a sound. The notifying step may notify the start of speech recognition through at least one of a sound, a vibrator, and a LED.

Thus, the terminal or the method according to this invention starts the speech recognition operation (speech detection) while the speech-recognition-start sound is being emitted. This allows the speech recognition function to correctly detect user's speech even if it is given before the speech-recognition-start sound stops, preventing the speech from being recognized incorrectly.

### BRIEF DESCRIPTION OF THE DRAWINGS

These and other objects, features and advantages of the invention will become more fully apparent from the following detailed description taken in conjunction with accompanying drawings.
Figs. 1a - 1d are timing diagrams showing the speech recognition operation of a phone which starts speech recognition as instructed by a user.
Fig. 2 is a flowchart showing the speech recognition operation of the telephone which starts speech recognition as instructed by the user.
Fig. 3 is a diagram showing the preferable circuit configuration of an embodiment of a cellular phone according to this invention.
Fig. 4 is a flowchart showing the preferable operation of the embodiment of the cellular phone shown in Fig. 3.
Figs. 5a - 5d are preferable timing diagrams showing the speech recognition operation of the embodiment of the cellular phone shown in Fig. 3.
Fig. 6 is a preferable diagram showing the internal structure of the RAM of the embodiment shown in Fig. 3.

### DETAILED DESCRIPTION OF THE PREFERRED EMBODIMENT

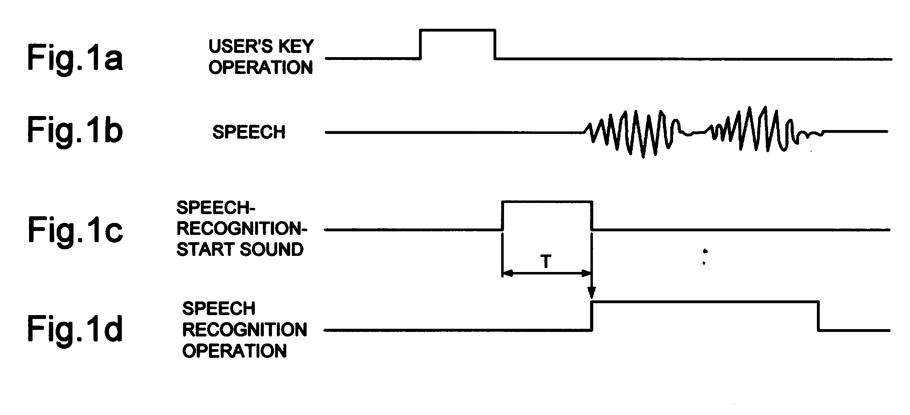

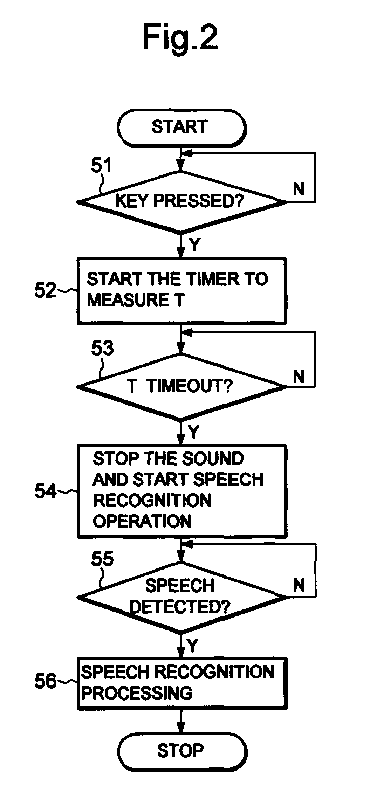

Referring now to Figs. 1a - 1d and Fig. 2 for a more complete understanding of this invention, the following describes the speech recognition function of a mobile terminal which starts speech recognition as instructed by a user.

When the user presses a speech recognition start key as shown in Fig. 1a (step 51 in Fig. 2), the terminal gives a speech-recognition-start sound informing the user of the start of speech recognition as shown in Fig. 1c (steps 52 and 53 in Fig. 2). After T seconds, the terminal stops the speech-recognition-start sound and, as shown in Fig. 1d, starts the speech recognition operation (step 54 in Fig. 2). Upon detecting user's speech (step 55 in Fig. 2), the terminal recognizes the detected speech according to a predetermined method as shown in Fig. 1b (step 56 in Fig. 2).

However, as the user becomes familiar with this speech recognition start operation on this mobile terminal, he or she sometimes starts speaking before the start sound stops. In this case, user's speech given before speech recognition starts is not detected. This prevents the start of the speech, the most important part of speech recognition, from being recognized correctly, sometimes resulting in the whole speech being recognized incorrectly.

To prevent the speech from being recognized incorrectly, the terminal according to this invention starts the speech recognition operation (speech detection) while the speech-recognition-start sound is being emitted. This allows the speech recognition function to correctly detect user's speech even if it is given before the speech-recognition-start sound stops.

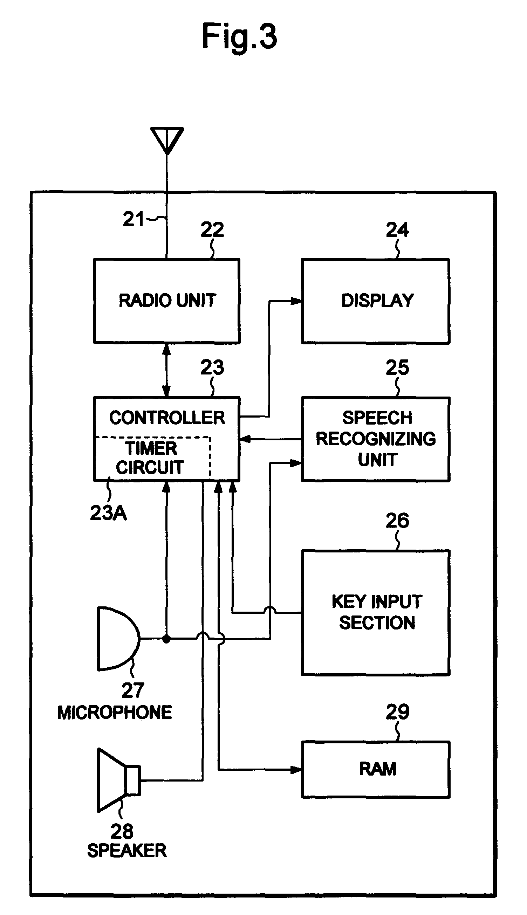

Referring to Figs. 3 to 6, the following describes this invention more in detail. Fig. 3 is a diagram showing the circuit of a preferable embodiment of a mobile terminal, such as a cellular phone, according to this invention.

A radio unit 22 shown in Fig. 3 frequency-converts and demodulates radio waves received via an antenna 21. The radio unit 22 also modulates and frequency-converts transmission signals received from a controller 23. A display 24 displays the functions of the cellular phone or the communication status of it. A speech recognizing unit 25 detects and recognizes user-generated speech entered from a microphone 27. A key input section 26 is used when the user operates keys on the cellular phone. A speaker 28 outputs, during communication, partner's speech or sounds generated by the controller 23. The controller 23 controls the radio unit 22 to process send/receive data, the speech recognizing unit 25 to do the speech recognition operation, the display 24 to display the speech recognition results generated by the speech recognizing unit 25, and the key input section 26 to process on the basis of the operated key. The controller 23 contains a timer circuit 23A. This circuit 23A controls the time at which the speech-recognition-start sound is generated or the duration from the time the speech recognition operation starts to the time the sound stops. A RAM 29 stores partner's names and their telephone numbers corresponding to it displayed on the display 24 when the telephone directory function is used.

When the user performs operation via the key input section 26 (for example, presses the send button) and speaks to the microphone 27, the speech recognizing unit 25 recognizes the spoken speech (for example, a partner's name). The unit sends the result to the controller 23 for analysis. Based on the analyzed result, the controller 23 performs the corresponding operation; for example, it checks data stored in the RAM 29 and automatically dials the telephone number corresponding to the partner's name.

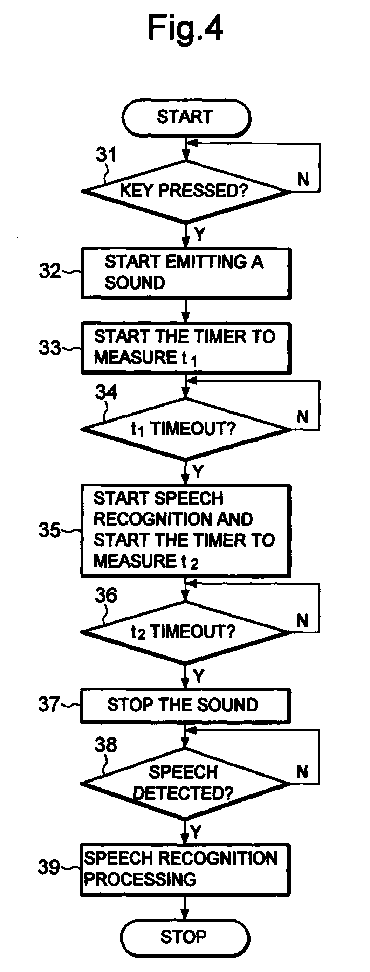

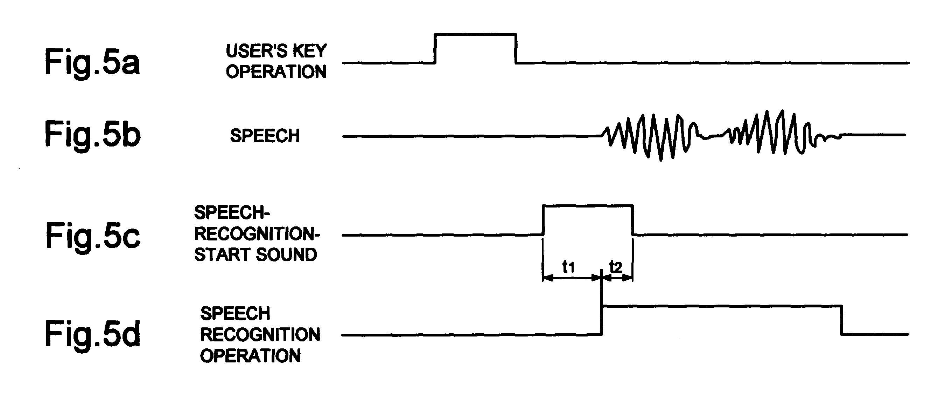

Fig. 4 is a flowchart showing the operation of a speech recognition unit in the cellular phone used in the embodiment. Figs. 5a to 5d are timing diagrams showing the speech recognition operation of the speech recognition unit in the cellular phone used in the embodiment.

As shown in Fig. 5a, when the cellular phone user presses a key and the controller 23 detects that the key has been pressed (step 31 in Fig. 4), the controller 23 outputs the speech-recognition-start sound as shown in Fig. 5c to inform the user that the unit is going to start speech recognition (step 32 in Fig. 4). The key operation in step 31 in Fig. 4 triggers the speech entry. Any button -- send button, dial button, or special trigger button -- may be used for this operation as long as it does not affect normal key operation. Then, the controller 23 causes the timer circuit 23A to start measuring a predetermined time of t1, for example, 200ms (step 33 in Fig. 4). When the predetermined time of t1 elapses after the speech-recognition-start sound is generated (step 34 in Fig. 4), the controller 23 starts the speech recognition operation as shown in Fig. 5d and detects the user's speech as shown in Fig. 5b. At this time, the controller 23 also causes the timer circuit 23A to start measuring a predetermined time of t2, for example 100ms (step 35 in Fig. 4). When the predetermined time of t2 elapses (step 36 in Fig. 4), the controller 23 stops the sound (step 37 in Fig. 4). After that, when the speech recognizing unit 25 detects the Speech (step 38 in Fig. 4), the controller 23 controls the speech recognizing unit 25 to perform speech recognition processing and determines what is the detected speech (step 39 in Fig. 4). The controller 23 processes the result of speech recognition and controls the cellular phone according to a predetermined procedure. For example, it displays the result of speech recognition on the display 24 or emits sounds from the speaker 28.

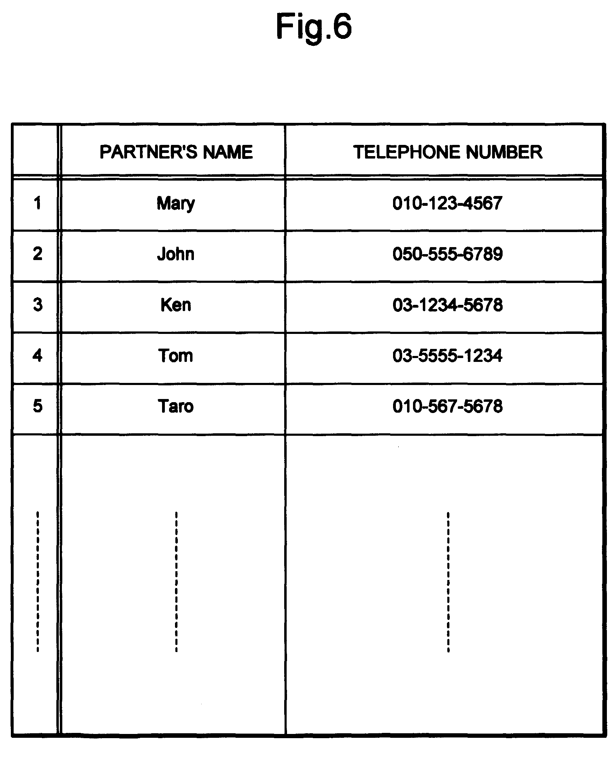

Fig. 6 is a diagram showing the internal structure of the RAM 29 used in the preferred embodiment shown in Fig. 3. As shown in Fig. 6, the RAM 29 stores partner's names and their telephone numbers corresponding them. For example, when the controller 23 detects "Mary" as a result of speech recognition in step 39 in Fig. 4, it extracts the telephone number "010-123-4567" corresponding to "Mary". After that, a call to the telephone number "101-123-4567" is made automatically.

When the predetermined time of t1 has elapsed after the speech-recognition-start sound is generated, the cellular phone used in the embodiment starts the speech recognition operation (speech detection). And, after the predetermined time of t2 elapses from the start of the speech recognition operation, the speech-recognition-start sound stops. That is, the cellular phone starts the speech recognition operation (speech detection) before the speech-recognition-start sound stops. Therefore, even if the user starts speaking even before the speech-recognition-start sound stops, the cellular phone is able to do the speech recognition operation (speech detection) during the predetermined time of t2.

The preferred embodiment of this invention has been described. However, the mobile terminal according to this invention is not limited to the above embodiment. For example, the cellular phone used in this embodiment outputs the speech-recognition-start sound to inform the user of the start of speech recognition. Instead of this speech-recognition-start sound, it is possible to use anything else that tells the user that the cellular phone starts speech recognition. For example, the light of a light emitting diode, a vibrator, a character or a picture on the display, or a synthesized sound may be used. In addition, the speech-recognition-start sound may be output not only when the user presses a key but also after a special message is displayed.

In the above embodiment, a cellular phone is used as an example of the mobile terminal according to this invention. This mobile terminal may be any unit with the speech recognition function. For example, a mobile radio unit such as a pager, a mobile data terminal with the cellular phone function, a wire communication unit, or a personal computer may be used as long as they have the speech recognition function.

As described above, the speech recognition unit according to this invention starts the speech recognition operation (speech detection) before the speech-recognition-start sound stops. So, even if the user starts speaking before the speech-recognition-start sound stops, the unit detects the start of a speech, the most important part of speech recognition. This prevents the speech from being recognized incorrectly.

Obviously, numerous additional modifications and variations of the present invention are possible in light of the above teachings. It is, therefore, to be understood that within the scope of the appended claims, the invention may be practiced otherwise than as specifically described herein.

## Claims

1. A mobile terminal comprising:
notifying means for notifying a user of a start of speech recognition for a predetermined time;
speech recognizing means for recognizing speech; and
start control means for starting speech recognition according to said speech recognizing means before notification stops.

2. The mobile terminal as claimed in claim 1, further comprising:
storage means for storing a correspondence between partner's names and telephone numbers;
extraction means for extracting, when said speech recognizing means recognizes said partner's name, the telephone number corresponding to said partner's name stored in said storage means; and
automatic calling means for making an automatic call to the telephone number extracted by said extraction means.

3. The mobile terminal as claimed in claim 1, wherein said start control means starts speech recognition according to said speech recognizing means during a start of said notification and an end of it.

4. The mobile terminal as claimed in claim 3, further comprising:
first measuring means for measuring a first predetermined time after a start of said notification and wherein said start control means starts speech recognition according to said speech recognizing means after said first predetermined time elapses.

5. The mobile terminal as claimed in claim 4 further comprising:
second measuring means for measuring a second predetermined time after the start of said speech recognition; and
stop control means for stopping said notification after said second predetermined time elapses.

6. The mobile terminal as claimed in claim 1, wherein said notification is started by a user's operation.

7. The mobile terminal as claimed in claim 6, wherein said operation is a key operation.

8. The mobile terminal as claimed in claim 1, wherein said notifying means notifies a start of speech recognition through a sound.

9. The mobile terminal as claimed in claim 1, wherein said notifying means notifies a start of speech recognition through at least one of a sound, a vibrator, and a LED.

10. A speech recognition method for use on a mobile terminal comprising the steps of:
notifying for a predetermined time that said terminal will start speech recognition; and
starting said speech recognition before said notification stops.

11. The speech recognition method for use on the mobile terminal as claimed in claim 10, further comprising the steps of:
storing a correspondence between partner's names and telephone numbers;
recognizing said partner's name through said speech recognition;
extracting the telephone number corresponding to said partner's name, the partner's name and the telephone number being stored in said storing step; and
making an automatic call to the telephone number extracted by said extraction step.

12. The speech recognition method for use on the mobile terminal as claimed in claim 10, wherein said speech recognition start step starts said speech recognition at a point in time during a start of said notification and an end of it.

13. The speech recognition method for use on the mobile terminal as claimed in claim 10, further comprising the step of:
measuring a first predetermined time after a start of said notification and wherein said speech recognition start step starts recognizing speech after said first predetermined time elapses.

14. The speech recognition method for use on the mobile terminal as claimed in claim 13, further comprising the steps of:
measuring a second predetermined time after the start of said speech recognition; and
stopping said notification after said second predetermined time elapses.

15. The speech recognition method for use on the mobile terminal as claimed in claim 10, wherein said notification is started by a user's operation.

16. The speech recognition method for use on the mobile terminal as claimed in claim 15, wherein said operation is a key operation.

17. The speech recognition method for use on the mobile terminal as claimed in claim 10, wherein said notifying step notifies a start of speech recognition through a sound.

18. The speech recognition method for use on the mobile terminal as claimed in claim 10, wherein said notifying step notifies a start of speech recognition through at least one of a sound, a vibrator, and a LED.
